# EUROPEAN PATENT APPLICATION

(11) **EP 4 517 624 A1**
(43) Date of publication of application: **05.03.2025**
(21) Application number: 23193920.8
(22) Date of filing: 29.08.2023
(51) Int. Cl.: G06Q 10/20, H04L 9/00

(54) **DISTRIBUTED LEDGER SYSTEM FOR VERIFYING A CHARACTERISTIC OF A SPECIFIC MACHINE**

(71) Applicant: Siemens Aktiengesellschaft, 80333 München (DE)
(72) Inventor: Höfig, Kai, 83101 Rohrdorf (DE); Singh, Saurabh Narayan, 81739 München (DE); Malcher, Claudia-Camilla, 82166 Gräfelfing (DE); Dehler, Markus, 81377 München (DE)
(74) Representative: Siemens Patent Attorneys

(57) **Abstract**

A distributed ledger system is proposed which includes:
a manufacturer node unit,
a machine node unit representing a specific machine,
a service history unit unique for the specific machine and including a specific service contract, wherein the specific service contract is configured to provide a specific service performed in connection with the specific machine and in dependence on the characteristic of the specific machine, and
a verification unit, configured to initiate a performing of a verification scheme for verifying the characteristic of the specific machine in dependence on the specific service contract for obtaining a verification result, wherein
the service history unit is configured to perform the verification scheme, wherein if the obtained verification result is positive, the service history unit is configured to allow a performing of a first action in connection with the specific machine.

## Description

The present invention relates to a distributed ledger system including a distributed ledger for verifying a characteristic of a specific machine.

Each specific machine in an industrial context can have a service history that is important for product guarantees, resell purposes, maintenance activities in the future and decisions at runtime. That service history includes information about operating hours, maintenance activities, repairs, spare part usage, the timeline of service activities, owner history, places of operation or contractor information to document who did perform maintenance activities.

With a manually maintained service history, the data cannot be trusted, and responsibility lies in the hand of the operator of the specific machine. When it comes to warranty issues, the vendor has to trust the data of the operator. When the system runs in a safety-related environment, the specific machine can operate further, even when the maintenance intervals were not executed correctly.

A service history is, in classic environments, documented manually. That can either be a printed document where stamps or stickers are used to proof the authenticity of the applied service, since the maintainer is not necessarily the Original Equipment Manufacturer (OEM, manufacturer) of a product (specific machine). Furthermore, it is important for the value of the specific machine to let apply services only by provides that are capable of servicing the specific machine. Certified service providers can be nominated by the OEM.

Another way of documenting service activities is to use digital information systems. Those systems are usually proprietary systems provided by the OEM with limited possibilities of using the data. Only what is intended by the OEM can be stored and only by authorized services providers.

So, in an environment, where A wants to resell a specific machine to B that was produced by C and maintained by D, D has to be in the list of trusted maintainers or services providers for the specific machine to appear in the documentation. If B accepts D as a trusted service provider, they have to use other means of documentation along with the data provided by C.

Thus, the problem of trust is not solved in this constellation since the vendor of the specific machine can, especially in safety-related operations, implement trigger into the specific machine's software that request maintenance activities. But maintenance activities can be tampered either by unauthorized maintenance personnel or by the operator itself.

Therefore, it is one object of the present invention to improve the operation of a specific machine in a distributed ledger system.

According to a first aspect, a distributed ledger system including a distributed ledger, in particular a blockchain, for verifying at least a characteristic of a specific machine is proposed. The distributed ledger system further includes:
a manufacturer node unit representing a manufacturer of the specific machine,
a machine node unit representing the specific machine,
a service history unit unique for the specific machine and including a specific service contract, wherein the specific service contract is configured to provide a specific service performed in connection with the specific machine and in dependence on the at least one characteristic of the specific machine, and
a verification unit, configured to initiate a performing of a verification scheme for verifying the at least one characteristic of the specific machine in dependence on the specific service contract for obtaining a verification result, wherein
the service history unit is configured to, based on the initiated performing of the verification scheme, to perform the verification scheme, wherein if the obtained verification result is positive and the at least one characteristic is valid, the service history unit is configured to allow a performing of a first action in connection with the specific machine.

With the distributed ledger system according to the first aspect, the operation of a specific machine in a distributed ledger system is improved since it is possible to store in the distributed ledger all specific services, in particular maintenance activities, performed in connection with the specific machine, and at the same time, securely provide maintenance data, in particular collected by the specific machine, to the distributed ledger.

This has the technical effect, that at every time point, the specific services performed in connection with the specific machine are comprehensible and tamper-proof stored in the service history unit.

This has the advantage that the tamper resistance of the specific services performed in connection with the specific machine is improved while the traceability of these specific services is ensured in the distributed ledger.

Furthermore, the specific machine is capable of drawing conclusions from the maintenance data that is stored in the service history unit and is capable of enabling or disabling functions of the specific machine based on this drawn conclusions.

In addition, since all those actions (transactions) in the distributed ledger are based on the blockchain, the distributed ledger system becomes distributed over the ecosystems participants and neither the manufacturer nor the owner of the specific machine has to pay for the entire service. Furthermore, the distributed ledger system has a great value for the owner of the specific machine, since it can maintain a service log (service history) over a long period of time, independently from the manufacturer and whether it is still in business or has changed the maintenance policies.

The distributed ledger system according to the first aspect also provides additional services to its specific machines or specific product since the owner of products and/or specific machines can easily maintain the service history. The manufacturer is interested in having trusted products and trusted services associated with them.

The distributed ledger system includes the distributed ledger and its components, for example, the manufacturer node unit, the machine node unit and so on. In particular, the distributed ledger is the consensus of replicated, shared, and synchronized digital data that is geographically spread (distributed) across many sites, countries, or institutions. In contrast to a centralized database, a distributed ledger does not require a central administrator, and consequently does not have a single (central) point-of-failure. A blockchain is a distributed ledger with growing lists of records (blocks) that are securely linked together via cryptographic hashes. Each block contains a cryptographic hash of the previous block, a timestamp, and transaction data.

Preferably, the specific machine is a physical machine and can also be formed as a physical product. The specific machine can include one or multiple products or one or multiple product parts. A product can also be a single component for a specific machine. Preferably, the specific machine is a physical system using power to apply forces and control movement to perform an action. For example, the specific machine can be an energy generating machine such as a wind park or solar plant, a manufacturing machine, a household appliance such as a washing machine, a coffee machine or a dishwasher, and/or can be a vehicle such as a car or a plane. In embodiments, the specific machine is a road equipment, a traffic guidance system, an agriculture machine, a healthcare system, a train, a track-side system, a ship, an oceanic research equipment, a vessel, a satellite system, a space equipment system, an airplane or an oil rig.

Specifically, the manufacturer node unit is a smart contract that emits new non-fungible tokens to digitally identify a specific machine or a specific product and bind them to a manufacturer wallet. In addition, the machine node unit, the maintenance node unit and the third party unit respectively including a wallet implemented in software, with which the respective unit gets access to the distributed ledger.

For example, the manufacturer is an Original Equipment Manufacturer (OEM).

The machine node unit includes a wallet. The machine node unit includes hardware and/or software for representing the specific machine and to connect the specific machine to the distributed ledger for exchanging data between them.

Preferably, the service history unit is a service history smart contract including a service history. The service history unit enables a specific machine or specific product owner (or any other authorized party) to register a specific service contract or specific service smart contract to its specific machine or specific product. A service history smart contract includes the performed specific services of a specific machine or specific product in the past. In particular, all interactions using smart contracts, wallets and the distributed ledger itself are protected against misuse using the already well known technologies such as cryptographic hash and public key encryption or infrastructure.

Specifically, a specific service contract is a contract which defines a topic, for example, maintenance activities. It includes one or multiple specific services which fall under that topic, and which are necessary for the specific machine, to which the specific service contract is assigned, to fulfil, for example, warranty insurances for that specific machine. In particular, a specific service sets the rules for the execution of the specific service, and it is permanently stored to the distributed ledger. Further, in particular, a respective specific service is also embodied as a smart contract which, for example, defines maintenance intervals, maintenance activities, authorized maintenance personnel (either persons or companies) and/or logs maintenance activities.

Preferably, the initiation of the performing of the verification scheme can be triggered by the owner (owner unit) of the specific machine, for example, if the owner wants to sell the specific machine and/or wants to know whether the warranty of the specific machine is still valid.

In particular, the verification unit can be implemented as a part of the specific machine, as a part of the manufacturer node unit, as a part of the service history unit, as a part of the owner unit and/or as a part of the third party unit.

Preferably, the manufacturer node unit, the machine node unit, the maintenance unit, the service history unit and/or the verification unit can be implemented in software. If said unit is implemented in software it may be embodied as a computer program product, as a function, as a routine, as a program code or as an executable object. Parts of the above-mentioned respective units, e.g., the manufacturer node unit or the verification unit, may be implemented in hardware. If parts of said unit is implemented in hardware, it may be embodied as a device, e.g., as a computer or as a processor or as a part of a system, e.g., a computer system.

If the verification result is positive, then the characteristic is valid. In particular, the verification scheme results in a positive result if the performing of the verification scheme results in that that all specific services of a specific contract for a specific machine are successfully performed. For example, the term "successfully performed" means that for a specific machine associated to a specific service, all maintenance intervals of this specific service at the specific machine has been performed and has been complied with.

According to an embodiment, the performing of the verification scheme includes an execution of the specific service contract including an execution of the specific service in order to examine whether the specific service has been successfully performed in order to verify whether the at least one characteristic is valid.

According to a further embodiment, the at least one characteristic is embodied as a maintenance characteristic of the specific machine including maintenance intervals, maintenance activities and/or authorized maintenance personnel, and/or as an operation characteristic including operating times and/or operating hours of the specific machine.

Furthermore, the characteristic can be embodied as a technical condition which can be valid or invalid. For example, if the specific machine is a plane, a valid technical condition is whether the plane is technically alright, and no malfunction has occurred.

Another example for the maintenance activity is whether the filter of the coffee machine (specific machine) has been serviced during the regularly maintenance intervals. In embodiments, the maintenance activity may include an amount of service or maintenance resource used or refilled, a quality of equipment under service, for example percentage of filter usage, a residual lifetime, for example of light sources, a person that did execute the service activity, an amount of service completed, a service activity verification status, an amount of residual required service activity, an increase of lifetime due to service, a fulfillment of requirements provided trough a law.

According to a further embodiment, the distributed ledger system further includes:
a maintenance node unit representing a maintenance unit for servicing the specific machine, wherein the maintenance unit is configured to initiate the maintenance activities for servicing the specific machine.

Preferably, the maintenance unit can initiate or trigger a maintenance personnel for securely and safely executing maintenance activities at the specific machine. Then, if the maintenance activities are performed, the specific machine documents it and transmits it to the service history unit.

According to a further embodiment, the manufacturer node unit is configured to provide the specific service contract into the service history unit, wherein the provided specific service contract defines trusted entities, in particular the maintenance unit, which are allowed to initiate the maintenance activities for servicing the specific machine, wherein the trusted entities are configured to document the specific service performed in connection with the specific machine in the provided specific service contract.

In particular, a trusted entity is an entity which has the permission to perform maintenance activities at the specific machine. This permission can be provided by the manufacturer unit node, an insurance company and/or the distributed ledger itself. Further, this trusted entity can be a third party maintenance provider that can be authenticated by the distributed ledger.

Moreover, the distributed ledger is configured to initiate an execution of unauthorized maintenance activities, but those activities are logged and can either lead to loss of warranty or, in a safety-related context, can lead to a disabled specific machine until a valid maintenance unit executes required maintenance activities.

According to a further embodiment, the manufacturer node is a manufacturer smart contract configured to provide a non-fungible token representing a unique physical asset, in particular the specific machine, wherein the manufacturer smart contract is further configured to bind the non-fungible token to a manufacturer wallet of the manufacturer.

This embodiment has the advantage that it is documented who owns an asset and what the history of previously owners of the asset is.

In particular, a non-fungible token (NFT) is a unique digital identifier that is recorded on a distributed ledger, in particular a blockchain, and is used to certify ownership and authenticity. It cannot be copied, substituted, or subdivided. The ownership of an NFT is recorded in the blockchain and can be transferred by the owner, allowing NFTs to be sold and traded.

Thus, an NFT representing a physical asset such as a specific machine are bound to a wallet documenting the ownership of the asset itself.

Preferably, an asset or digital asset is an asset that can be based on the distributed ledger technology. Digital assets can represent different rights (e.g., ownership or usage rights) and therefore also have different characteristics. It can represent a digital or physical subject matter.

According to a further embodiment, the machine node unit is configured to automatically track and store machine information indicating the performed specific service on the specific machine and to enter the stored machine information into the service history unit.

This embodiment has the advantage that the specific machine is capable of enter standalone machine information onto the distributed ledger, in particular into the service history unit. Then, a third party which wants to buy the machine can examine in dependence on the service history unit and by executing the specific service contract or multiple specific service contracts included in the service history unit whether every single specific service contract has been successfully executed. Thus, if this is true, the third party has the information that the warranty is already valid.

Further, in this embodiment, the specific machine is configured to directly communicate with the distributed ledger and to add data of maintenance activities to its record on the service history unit that cannot be tampered or changed afterwards. Being able to simply report data (machine information) to the distributed ledger, e.g., operating hours, the specific machine can also log maintenance activities and can retrieve information about itself. For example, when all maintenance activities were performed to the requirements, the specific machine can safely continue its operation. When maintenance activities are required, the specific machine is configured to automatically inform the vendor, the operator, the maintenance unit or other systems. When maintenance intervals are overdue, the specific machine is configured to automatically stop to operate, e.g., in a safety-related context, or further distribute that information to personnel, other systems or other specific machines.

In particular, the specific machine is configured to transmit the stored machine information onto the distributed ledger, in particular to enter the stored machine information into the service history unit. Further, in turn, the distributed ledger is configured to transmit any information required or useful for the specific machine to the specific machine. In addition, the manufacturer unit, the maintenance unit, the owner unit and/or the third party unit are configured to transmit data to the distributed ledger as well as to receive data from the distributed ledger.

Machine information can include information indicating information about the performed specific services or information about specific features or specific settings of the specific machine.

According to a further embodiment, the specific machine is configured to receive at least an updated characteristic for the specific machine from the manufacturer node unit via the distributed ledger and to redefine the received at least one updated characteristic as a new characteristic for the specific machine.

Preferably, an updated characteristic is embodied as an updated maintenance characteristic of the specific machine including updated maintenance intervals, updated maintenance activities and/or updated authorized maintenance personnel, and/or as an updated operation characteristic including updated operating times and/or updated operating hours of the specific machine.

Based on the new characteristic, the verification scheme is then performed again.

In particular, the manufacturer node unit is configured to transmit the updated characteristic for the specific machine in retrospective.

According to a further embodiment, the distributed ledger system further includes:
a third party unit which is embodied as an owner unit of the specific machine, wherein the owner unit is configured to provide owner-specific information via the distributed ledger into the specific machine.

Further, the third party unit or the further third party unit can also be embodied as a potential buyer of the specific machine.

For example, the provided owner-specific information include information that in case of a change of ownership, the owner is now the "new" owner of the specific machine or which warranty obligations are valid at the current insurance or a future insurance.

According to a further embodiment, the owner unit is registered as the owner in the service history unit, wherein the owner unit is configured to add a further specific service, in particular a yearly inspection service, to the specific service contract, wherein the owner unit is further configured, in case of a warranty incident, to check whether a successful execution of the further specific service has been performed based on the service history unit.

According to a further embodiment, the owner unit is configured to enter an amount of the at least one characteristic into the specific service contract, wherein the distributed ledger system further includes a further third party unit which is configured to certify, by means of a certification means, the amount of the at least one characteristic entered by the owner of the specific machine.

The amount can be embodied as a number of operating hours a specific machine has operated.

According to a further embodiment, the first action includes a continued operation of the specific machine, an access to the specific machine and/or a taking off of the specific machine.

In particular, if the first action is performed, then it is proved that the operation of the specific machine can be continued since the characteristic is valid, alright and safe. The taking off of the specific machine is a case where the specific machine is embodied as a plane. Thus, the characteristic includes all requirements and sensor values necessary for taking off which are fulfilled if the first action is performed.

According to a further embodiment, if the obtained verification result is negative and the at least one characteristic is invalid, the service history unit is configured to prohibit the performing of the first action and to allow a performing of a second action in connection with the specific machine, wherein the second action includes a termination of the operation of the specific machine.

The second action can include an automatically stopping of the current performed operation or action of the specific machine or a continued constrained-operation in a safety-constrained context. Further, the termination of the operation includes a denying of an access to the specific machine or a denying of a start command for taking off with the specific machine embodied as a plane.

According to a further embodiment, the specific machine includes a communication unit and is further configured to perform the second action, wherein the communication unit is configured to transmit termination information indicating the termination of the operation of the specific machine to other specific machines included in the distributed ledger system.

In particular, the communication unit includes the required security certificates to securely connect and communicate with the other components of the distributed ledger system and preferably with the distributed ledger. Further, the communication unit is configured to communicate to other systems about the maintenance status or operating status of the specific machine it is executed on.

Preferably, the communication unit is further configured to communicate to operators, to the maintenance unit and/or to other maintenance units and/or to exchange information with them.

According to a further embodiment, the communication unit is further configured to securely communicate with the distributed ledger by means of cryptographic means to monitor the service history unit and to enable or disable at least a function of the specific machine.

Preferably, cryptographic means include cryptographic key material which is used in a public key infrastructure for communicating within the distributed ledger and/or for authenticating the manufacturer node unit, the machine node unit, the third party unit and/or the maintenance unit at the distributed ledger. The cryptographic key material includes public keys and private keys.

Any embodiment of the first aspect may be combined with any embodiment of the first aspect to obtain another embodiment of the first aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

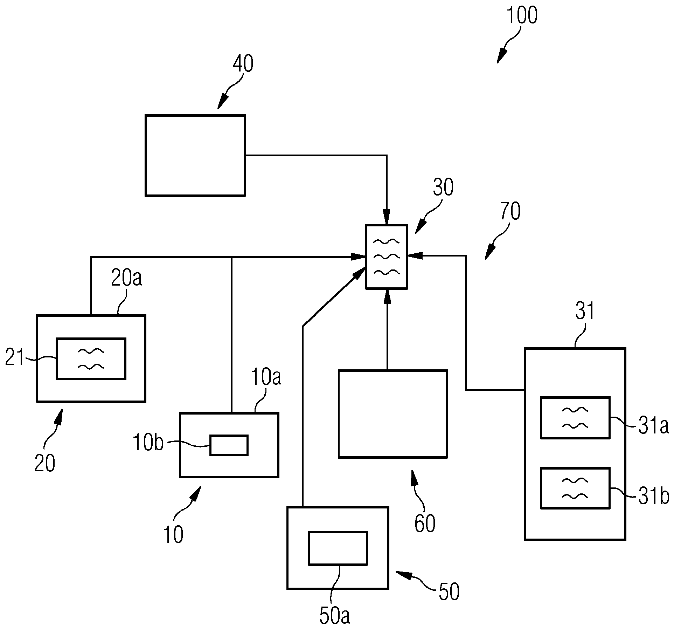

Further embodiments, features and advantages of the present invention will become apparent from the subsequent description and dependent claims, taken in conjunction with the accompanying drawing, in which the figure shows a schematic block diagram of a distributed ledger system.

The figure shows a schematic block diagram of a distributed ledger system 100 including a distributed ledger 70, in particular a blockchain, for verifying a characteristic of a specific machine 10a. The distributed ledger system 100 further includes a manufacturer node unit 20, a machine node unit 10, a service history unit 30, a verification unit 40 and a maintenance node unit 50. In the figure, the characteristic is embodied as a maintenance characteristic of the specific machine 10a including maintenance intervals, maintenance activities and/or authorized maintenance personnel. Further, in other embodiments, the characteristic is embodied as an operation characteristic including operating times and/or operating hours of the specific machine 10a.

In the following, the interaction between the manufacturer node unit 20, the machine node unit 10, the service history unit 30, the verification unit 40 and the maintenance node unit 50 is explained.

The manufacturer node unit 20 represents a manufacturer 20a of the specific machine 10a, wherein the machine node unit 10 represents the specific machine 10a.

The service history unit 30 is unique for the specific machine 10a and includes a specific service contract 31. The specific service contract 31 is configured to provide a specific service 31a performed in connection with the specific machine 10a and in dependence on the at least one characteristic of the specific machine 10a.

The verification unit 40 is configured to initiate a performing of a verification scheme for verifying the at least one characteristic of the specific machine 10a in dependence on the specific service contract 31 for obtaining a verification result. In detail, the performing of the verification scheme includes an execution of the specific service contract 31 including an execution of the specific service 31a in order to examine whether the specific service 31a has been successfully performed in order to verify whether the at least one characteristic is valid. In the figure, the verification unit 40 is arranged external to the machine node unit 10. In embodiments not shown, the verification unit 10 can be part of the machine node unit 10.

Here, the service history unit 30 is configured to, based on the initiated performing of the verification scheme, to perform the verification scheme, wherein if the obtained verification result is positive and the at least one characteristic is valid, the service history unit 30 is configured to allow a performing of a first action in connection with the specific machine 10a. For example, the first action includes a continued operation of the specific machine 10a, an access to the specific machine 10a and/or a taking off of the specific machine 10a.

Further, the maintenance node unit 50 represents a maintenance unit 50a for servicing the specific machine 10a. Here, the maintenance unit 50a is configured to initiate the maintenance activities for servicing the specific machine 10a.

In the following, some application examples of the distributed ledger system 100 according to the figure are described:

### First application example - third party yearly inspection

In the first application example, the manufacturer node unit 20 is configured to provide (not shown) the specific service contract 31 into the service history unit 30. The provided specific service contract 31 defines trusted entities, in particular the maintenance unit 50a, which are allowed to initiate the maintenance activities for servicing the specific machine 10a. Thus, the provided specific service contract 31 enables the manufacturer to register trusted entities that can service its machines, in particular the specific machine 10a. A trusted entity, which gets access to the distributed ledger 70 via its wallet, which has that right is configured to document the specific service 31a performed in connection with the specific machine 10a in the provided specific service contract 31.

A documentation of the performed specific service 31a here includes the dates of inspections of the specific machine 10a.

Thus, for example, if the owner of the specific machine 10a wants to know the inspections dates of the specific machine 10a, these dates can be listed in the service history unit 30. If there is no gap larger than one year, the owner gets the information "valid yearly inspection" since the verification result is positive. Further, the inspection dates can only be added to that specific service contract 31 for specific machines whose respective NFTs are generated by that manufacturer 20a and when the manufacturer 20a has registered the respective entities which provides the specific service 31a. Once data is entered, it cannot be changed or removed anymore.

In a similar case, a third party unit 60 of the distributed ledger system 100 is embodied as an owner unit of the specific machine 10a. This applies when an owner buys the specific machine 10a of the manufacturer 20a and is registered as the owning wallet (owner) in the service history unit 30. Further, the owner unit is configured to add a further specific service 31b, in particular a yearly inspection service, to the specific service contract 31. In addition, the service history unit 30 enables service providers (for example, a maintenance unit 50a) to register specific services for his specific machine 10a. Here, the owner unit or the manufacturer node unit 20 is further configured, in case of a warranty incident, to check whether a successful execution of the further specific service 31b has been performed based on the service history unit 30. In particular, it can check the validity of the service dates by looking at the list of accepted service providers. Moreover, the owner unit is configured to provide owner-specific information via the distributed ledger 70 into the specific machine 10a.

### Second application example - additional service contact

The owner of a specific machine 10a wants to document the hours of operation (operation characteristic) of its specific machine 10a regularly as part of an insurance policy and to uncover manipulations. The owner uses a third party service provider (further third party unit, not shown) that is a trusted company by the insurance. The owner associates the specific service contract 31 for documenting hours of operation from the third party service provider.

Every once in a while, the owner unit is configured to enter an amount of the at least one characteristic into the specific service contract 31. In other words, the owner of the specific machine 10a enters the hours of operation of its specific machine 10a to the specific service contract 31. Then, the further third party unit is configured to certify, by means of a certification means, the amount of the at least one characteristic entered by the owner of the specific machine 10a. Thus, the further third party unit certifies the correct amount of hours, e.g., by visual inspection (certification means). Without the manufacturer node unit 20 being involved, the insurance can transparently see the progress of operating hours. In case that the specific machine 10a is ever sold, the possibility for manipulation is low.

### Third application example - proof of ownership

The manufacturer node unit 20 is a manufacturer smart contract 21 configured to provide a non-fungible token representing a unique physical asset, in particular the specific machine 10a. Here, the manufacturer smart contract 21 is further configured to bind the non-fungible token to a manufacturer wallet of the manufacturer 20a for documenting the ownership of the unique physical asset itself. Thus, the distributed ledger system 100 of the figure is also used in this application example to document who owns a physical asset and what the history of previously owners of the physical asset is.

### Fourth application example - invalid operation

The machine node unit 10 is configured to automatically track and store machine information indicating the performed specific service 31a on the specific machine 10a and to enter the stored machine information into the service history unit 30. In turn, the specific machine 10a is configured to constantly analyzes the data on the distributed ledger 70. In doing so, the specific machine 10a concludes that the required maintenance activities (maintenance characteristics) were not executed according to the maintenance plan.

This corresponds to an obtained verification result which is negative and thus, the at least one characteristic is invalid. Here, the service history unit 30 is configured to prohibit the performing of the first action and to allow a performing of a second action in connection with the specific machine 10a, wherein the second action includes a termination of the operation of the specific machine 10a.

In detail, the specific machine 10a includes a communication unit 10b and is further configured to perform the second action, wherein the performing of the second action includes a shutdown of the safety-critical part of its internal functions to prevent damage.

By means of the communication unit 10b, termination information indicating the termination of the operation of the specific machine 10a are transmitted then to other specific machines included in the distributed ledger system 100. In other words, the specific machine 10a informs other specific machines about its decision, so that they can safely take this action into account. Previously to that step, the specific machine 10a warns other systems and personnel about this step by means of the communication unit 10b.

In addition, for this, the communication unit 10b is further configured to securely communicate with the distributed ledger 70 by means of cryptographic means to monitor the service history unit 30 and to enable or disable at least a function of the specific machine 10a.

### Fifth application example - updated characteristic

For example, it is possible that the manufacturer node unit 20 changes the maintenance intervals for performing the maintenance activities of the specific machine 10a. Thus, the characteristic for the specific machine 10a is updated. In this case, the specific machine 10a is configured to receive an updated characteristic for the specific machine 10a from the manufacturer node unit 20 via the distributed ledger 70 and to redefine the received updated characteristic as a new characteristic for the specific machine 10a.

Although the present invention has been described in accordance with preferred embodiments, it is obvious for the person skilled in the art that modifications are possible in all embodiments.

### Reference Numerals:

- 10: machine node unit
- 10a: specific machine
- 10b: communication unit
- 20: manufacturer node unit
- 20a: manufacturer
- 21: manufacturer smart contract
- 30: service history unit
- 31: specific service contract
- 31a: specific service
- 31b: further specific service
- 40: verification unit
- 50: maintenance node unit
- 50a: maintenance unit
- 60: third party unit
- 70: distributed ledger
- 100: distributed ledger system

## Claims

1. A distributed ledger system (100) including a distributed ledger (70), in particular a blockchain, for verifying at least a characteristic of a specific machine (10a), the distributed ledger system (100) further including:
a manufacturer node unit (20) representing a manufacturer (20a) of the specific machine (10a),
a machine node unit (10) representing the specific machine (10a),
a service history unit (30) unique for the specific machine (10a) and including a specific service contract (31), wherein the specific service contract (31) is configured to provide a specific service (31a) performed in connection with the specific machine (10a) and in dependence on the at least one characteristic of the specific machine (10a), and
a verification unit (40), configured to initiate a performing of a verification scheme for verifying the at least one characteristic of the specific machine (10a) in dependence on the specific service contract (31) for obtaining a verification result, wherein
the service history unit (30) is configured to, based on the initiated performing of the verification scheme, to perform the verification scheme, wherein if the obtained verification result is positive and the at least one characteristic is valid, the service history unit (30) is configured to allow a performing of a first action in connection with the specific machine (10a).

2. The system according to claim 1,
**characterized in**
**that** the performing of the verification scheme includes an execution of the specific service contract (31) including an execution of the specific service (31a) in order to examine whether the specific service (31a) has been successfully performed in order to verify whether the at least one characteristic is valid.

3. The system according to claim 1 or 2,
**characterized in**
**that** the at least one characteristic is embodied as a maintenance characteristic of the specific machine (10a) including maintenance intervals, maintenance activities and/or authorized maintenance personnel, and/or as an operation characteristic including operating times and/or operating hours of the specific machine (10a).

4. The system according to claim 3,
**characterized by**:
a maintenance node unit (50) representing a maintenance unit (50a) for servicing the specific machine (10a), wherein the maintenance unit (50a) is configured to initiate the maintenance activities for servicing the specific machine (10a) .

5. The system according to claim 4,
**characterized in**
**that** the manufacturer node unit (20) is configured to provide the specific service contract (31) into the service history unit (30), wherein the provided specific service contract (31) defines trusted entities, in particular the maintenance unit (50a), which are allowed to initiate the maintenance activities for servicing the specific machine (10a), wherein the trusted entities are configured to document the specific service (31a) performed in connection with the specific machine (10a) in the provided specific service contract (31).

6. The system according to one of claims 1 - 5,
**characterized in**
**that** the manufacturer node unit (20) is a manufacturer smart contract (21) configured to provide a non-fungible token representing a unique physical asset, in particular the specific machine (10a), wherein the manufacturer smart contract (21) is further configured to bind the non-fungible token to a manufacturer wallet of the manufacturer (20a).

7. The system according to one of claims 1 - 6,
**characterized in**
**that** the machine node unit (10) is configured to automatically track and store machine information indicating the performed specific service (31a) on the specific machine (10a) and to enter the stored machine information into the service history unit (30).

8. The system according to one of claims 1 - 7,
**characterized in**
**that** the specific machine (10a) is configured to receive at least an updated characteristic for the specific machine (10a) from the manufacturer node unit (20) via the distributed ledger (70) and to redefine the received at least one updated characteristic as a new characteristic for the specific machine (10a).

9. The system according to one of claims 1 - 8,
**characterized by**:
a third party unit (60) which is embodied as an owner unit of the specific machine (10a), wherein the owner unit is configured to provide owner-specific information via the distributed ledger (70) into the specific machine (10a).

10. The system according to claim 9,
**characterized in**
**that** the owner unit is registered as the owner in the service history unit (30), wherein the owner unit is configured to add a further specific service (31b), in particular a yearly inspection service, to the specific service contract (31), wherein the owner unit is further configured, in case of a warranty incident, to check whether a successful execution of the further specific service (31b) has been performed based on the service history unit (30).

11. The system according to claim 9 or 10,
**characterized in**
**that** the owner unit is configured to enter an amount of the at least one characteristic into the specific service contract (31), wherein the distributed ledger system (100) further includes a further third party unit which is configured to certify, by means of a certification means, the amount of the at least one characteristic entered by the owner of the specific machine (10a).

12. The system according to one of claims 1 - 11,
**characterized in**
**that** the first action includes a continued operation of the specific machine (10a), an access to the specific machine (10a) and/or a taking off of the specific machine (10a).

13. The system according to one of claims 1 - 12,
**characterized in**
**that** if the obtained verification result is negative and the at least one characteristic is invalid, the service history unit (30) is configured to prohibit the performing of the first action and to allow a performing of a second action in connection with the specific machine (10a), wherein the second action includes a termination of the operation of the specific machine (10a).

14. The system according to claim 13,
**characterized in**
**that** the specific machine (10a) includes a communication unit (10b) and is further configured to perform the second action, wherein the communication unit (10b) is configured to transmit termination information indicating the termination of the operation of the specific machine (10a) to other specific machines included in the distributed ledger system (100).

15. The system according to one of claims 1 - 14,
**characterized in**
**that** the communication unit (10b) is further configured to securely communicate with the distributed ledger (70) by means of cryptographic means to monitor the service history unit (30) and to enable or disable at least a function of the specific machine (10a).
